# EUROPÄISCHE PATENTSCHRIFT

(11) **EP 1 900 414 B1**
(45) Veröffentlichungstag und Bekanntmachung des Hinweises auf die Patenterteilung: **21.08.2013**
(21) Anmeldenummer: 07121625.3
(22) Anmeldetag: 11.10.2005
(51) Int. Cl.: B01D 46/52

(54) **Luftfilter**
Air filter
Filtre à air

(30) Priorität: 13.10.2004 DE 102004050018
(43) Veröffentlichungstag der Anmeldung: 19.03.2008
(62) Teilanmeldung aus: 05109436.5
(73) Patentinhaber: MANN+HUMMEL GmbH, 71638 Ludwigsburg (DE)
(72) Erfinder: Lampert, Johannes, 82237 Wörthsee (DE); Oelpke, Reinhard, 67376 Harthausen (DE); Pelz, Andreas, 70806 Kornwestheim (DE); Schulz, Franziska, 67105 Schifferstadt (DE); Hotop, Torsten, 76356 Weingarten (DE)

(56) Entgegenhaltungen:
- EP-A- 1 169 109
- US-A1- 2002 184 864
- US-A1- 2003 106 432

## Beschreibung

### Technisches Gebiet

Die Erfindung betrifft einen zu einem Luftfilterelement passenden Gegenpart gemäß der Gattung des Patentanspruches 1 und als Gesamtsystem eine Filtervorrichtung gemäß der Gattung des Patentanspruches 5.

### Stand der Technik

Filterelemente mit axialer Durchströmung werden in vielen Bereichen eingesetzt, in denen es gilt, ein Gas oder eine Flüssigkeit zu filtrieren. Diese Elemente werden hierzu in jeglicher Art von Gehäusen eingesetzt und müssen bestimmungsgemäß nach dem Erreichen einer bestimmten Ladung oder nach vorgegebenen Wartungsintervallen ersetzt oder gereinigt werden. Hierbei ist die Möglichkeit der Handhabung des Filterelementes von entscheidender Bedeutung, da ein schlecht handhabbares Filterelement möglicherweise erst gar nicht getauscht oder gereinigt wird oder bei dem Versuch der Handhabung über nicht vorgesehene Werkzeuge Schäden am Element oder System verursacht werden können. In der Offenlegungsschrift US 2002/184864 A1 wird eine Filtervorrichtung mit einer abwechselnd angeordneten flachen und gefalteten Filterlage gelehrt, wobei die flache Lage mit der gefalteten Lage im Wechsel derart angeordnet ist, dass sich Kanäle mit offenem Querschnitt ergeben. Die sich hieraus ergebenden Kanäle sind stirnseitig wechselseitig verschlossen, so dass das zu filternde Fluid bei der Durchströmung des Filterelementes von einer Anströmseite zu einer Abströmseite eine der Lagen, die zur Filterung des Fluides vorgesehen sind, durchtreten muss. Ein Stützkörper ist zentral in dem Filtermedium angeordnet und dadurch von den Kanälen umgeben und weist eine stirnseitige Öffnung auf. Ein Gegenpart zur Handhabung des Filterelements weist einen korrespondierend zur Öffnung im Stützkörper gestalteten Teil auf. Die EP 1169109 B zeigt ein axial durchströmtes Filterelement mit einer stirnseitigen Anströmung und einer gegenüberliegenden stirnseitigen Abströmung ohne eine Umlenkung des Gasstromes, bei der ein sich axial von der ersten Stirnseite erstreckender Griff vorgesehen ist, welcher fest mit dem Filterelement - bevorzugt mit dem inneren Kern des Filterelementes - verbunden ist. Dieser Griff erstreckt sich derart weit von der Stirnseite des Filterelementes, dass eine problemlose Handhabung werkzeugfrei mit der Hand möglich ist. In vielen Einbausituationen ist es jedoch nachteilig, wenn das Filterelement ein sich axial über die Stirnseite hinaus erstreckendes Griffelement verfügt, da der dadurch eingenommene Raum nicht mehr für weitere Funktionselemente zur Verfügung steht. Auch lassen sich derartige Filterelemente schlechter bei der Lagerhaltung stapeln, und ein fest mit dem Kern verbundener Griff erweist sich nachteilig bei der Herstellung des Filterelementes, bei der der Griff eingespannt werden muss, um die Filterlagen aufzuwickeln.

Die Aufgabe der Erfindung ist es daher, die oben genannten Nachteile zu vermeiden.

Diese Aufgabe wird durch die Merkmale der Patentansprüche 1 und 5 gelöst.

### Offenbarung der Erfindung

Das erfindungsgemäße Gehäuseteil, insbesondere ein Sicherungsgitter, ist ein Gegenpart für ein Filterelement, wobei das Filterelement durch das Gehäuseteil handhabbar ist. Dabei ist das Filterelement für einen Fluidstrom zur stirnseitigen Anströmung geeignet und weist ein axial durchströmtes Filtermedium, Mittel zur Abdichtung der Anströmseite von der Abströmseite des Filterelementes an der Außenseite des Filtermediums und wenigstens einen zentral im Filterelement angeordneten Stützkörper auf. Das Filtermedium weist hierbei abwechselnd angeordnete flache und gefaltete Filterlagen auf, wobei die flache Lage mit der gefalteten Lage im Wechsel derart angeordnet ist, dass sich Kanäle mit offenem, insbesondere dreieckigem, Querschnitt ergeben. Die sich hieraus ergebenden Kanäle werden nun stirnseitig wechselseitig verschlossen, so dass das zu filternde Fluid bei der Durchströmung des Filterelementes von einer Anströmseite - gebildet durch eine Stirnseite des Filterelementes - zu einer Abströmseite - gebildet durch dessen andere Stirnseite - eine der genannten Lagen, die zur Filterung des Fluides vorgesehen sind, durchtreten muss. Der Stützkörper ist in dieser Ausgestaltung zentral in dem Filtermedium angeordnet und dadurch von den Kanälen umgeben, wobei er sich axial im Wesentlichen bis zu wenigstens einer ersten Stirnseite des Filterelementes erstreckt. Die Lagen des Filtermediums sind hierbei bevorzugt aus einem Filterpapier hergestellt, können jedoch auch beispielsweise aus einem vollsynthetischen Medium bestehen. Hier müsste die gefaltete Lage durch eine Imprägnierung des vollsynthetischen Mediums unterstützt werden. Das Filterelement kann dabei eine eckige, runde, elliptische oder ovale Querschnittsform aufweisen, bevorzugt ist es an den Außenkanten rund und zwischen den Außenkanten gerade in Form eines Ovals aufgebaut. Der Stützkörper, welcher zentral im Filterelement angeordnet ist, wird bevorzugt im Spritzgießverfahren hergestellt, kann jedoch auch aus einem anderen Material wie Kunststoff und in einem anderen Herstellverfahren hergestellt werden. Durch den wechselseitigen Verschluss der zu durchströmenden Kanäle lässt es sich erreichen, dass durch eine geschickte Anordnung jeweils die vollständige Fläche des umgebenden Filtermediums der ersten anströmseitigen Kanäle durchströmt werden kann, um in die zweiten abströmseitigen Kanäle zu gelangen. Eine Ausnahme bilden hierbei nur die zu äußerst liegenden Kanäle. Dabei erstreckt sich der Stützkörper axial wenigstens nur bis zur ersten Stirnseite des Filterelementes, bevorzugt erstrecken sich jedoch beide Stirnseiten des Stützkörpers bis zu den entsprechenden Stirnseiten des Filtermediums. Es sind jedoch auch sämtliche Längenunterschiede zwischen axialer Länge des Stützkörpers und axialer Länge des Filtermediums denkbar, solange nur die eine Stirnseite des Stützkörpers sich bis zur ersten Stirnseite des Filtermediums erstreckt. Diese Stirnseite des Stützkörpers weist wenigstens eine stirnseitig angeordnete Öffnung auf, in welcher Mittel zur Handhabung des Filterelementes mittels eines hierzu korrespondierenden Gegenparts angeordnet sind. Dies bedeutet, dass Stützkörper und Filtermedium an der ersten Stirnseite einen ebenen stirnseitigen Abschluss des Filterelementes bilden. Durch das in einer stirnseitigen Öffnung des Stützkörpers vorhandene Mittel zur Handhabung des Filterelementes kann nun mit Hilfe eines Gegenparts, welcher in diese Öffnung eingreift, das Filterelement mit dem Gegenpart beispielsweise zu Wartungs- oder Ersatzzwecken aus einem Gehäuse herausgenommen oder auch mittels dieses Gegenparts wieder in das Gehäuse eingesetzt werden. Durch den stirnseitigen ebenen Abschluss des Filterelementes ergeben sich große Vorteile in der Raumausnutzung. Ein weiterer Vorteil ergibt sich in der Handhabung des Filterelementes selbst, da dieses ohne hervorstehende Teile besser zu transportieren und zu lagern ist und weiterhin während des Transportes oder der Handhabung kein Brechen überstehender Teile möglich ist.

Der erfindungsgemäße, als Gehäuseteil ausgebildete Gegenpart weist einen korrespondierend zur Öffnung im Stützkörper gestalteten Teil auf, derart, dass sich der Gegenpart im Inneren der Öffnung des Stützkörpers lösbar mit dem Stützkörper verbinden lässt, wodurch eine Handhabung des Filterelementes gegeben ist. Ein Teil des Gegenparts greift dabei in den Stützkörper ein und kann dort, z. B. über eine geeignete Rastverbindung, eine lösbare Verbindung mit dem Filterelement eingehen, wobei die eingegangene Verbindung in der Lage ist, durch den Gegenpart das Filterelement aus dem Einbauort zu entnehmen bzw. es in dem Einbauort einzusetzen. Bevorzugt ist die Lösbarkeit des Gegenparts werkzeuglos zu bewerkstelligen, d. h. dass durch einen einfachen Handgriff die Verbindung zwischen Gegenpart und Filterelement zerstörungsfrei getrennt werden kann.

Gemäß einer Ausgestaltung des Gegenparts weist dieser korrespondierend zur Öffnung im Stützkörper ausgestaltete Teil des Gegenparts einen Führungs- und Zentrierungsteil sowie einen Verbindungsteil auf. Zunächst taucht der Teil des Gegenparts mit dem Führungs- und Zentrierungsteil in die Öffnung des Stützkörpers des Filterelementes ein und richtet dabei Filterelement und Gegenpart zueinander aus. Dadurch wird gewährleistet, dass die empfindliche stirnseitige Medienoberfläche des Filterelementes bei der Zusammenführung von Filterelement und Gegenpart nicht verletzt wird. Nach der Zentrierung der beiden Teile zueinander greift dann der Verbindungsteil des Gegenparts in das entsprechend korrespondierende Verbindungsmittel des Stützkörpers ein und verbindet sich lösbar mit diesem. Dies kann z. B. eine Clipsverbindung sein, wobei in der Öffnung im Stützkörper im weiteren Verlauf Fenster im Stützkörper angeordnet sind, in die eine Clipsnase des Gegenparts, welche eine federnde Befestigung aufweist, eingreifen kann. Über ein Zusammendrücken der federnden Befestigung kann diese Verbindung dann einfach und leicht wieder gelöst werden.

In einer Ausführungsform weist das Gehäuseteil einen Lufteinlass zur Anströmung der Stirnseite des Filterelementes auf und ist mit einem weiteren Gehäuseteil, in welchem das Filterelement eingesetzt ist, ebenfalls über eine lösbare Verbindung verbunden. So lässt sich nun beim Lösen des Gehäuseteils das Gehäuseteil mitsamt dem Filterelement entfernen, und anschließend lassen sich daraufhin Filterelement und Gehäuseteil voneinander trennen. In der bevorzugten Ausführung ist das Gehäuseteil ein Sicherungsgitter, welches einerseits einen möglichst geringen Druckverlust für die Einströmung in das Filterelement bedeutet und andererseits eine Sicherheit gegen Verletzung des Filtermediums darstellt, wobei die Luft direkt durch das Sicherungsgitter von außen in das Filterelement hineinströmt. Das Sicherungsgitter ist ebenfalls mit dem Gehäuseteil, in welchem das Filterelement eingesetzt ist, lösbar verbindbar, wobei durch die Zentriermöglichkeit zwischen Sicherungsgitter und Filterelement und einer Zwangsfixierung zwischen Sicherungsgitter und dem Gehäuseteil, in welchem das Filterelement eingesetzt ist, eine exakte Positionierung des Filterelementes zu dem Gehäuseteil stattfindet.

In der erfindungsgemäßen Filtervorrichtung mit einem Filterelement und einem als Gehäuseteil ausgebildeten Gegenpart gemäß den oben angegebenen Daten ist das Filterelement in einem ersten Gehäuseteil angeordnet, wobei eine im Bereich der ersten Stirnseite des Filterelementes radial umlaufende Dichtung des Filterelementes an einer korrespondierend hierzu ausgestalteten Gehäuseaufnahme des ersten Gehäuseteils anliegt. Die erste Stirnseite des Filterelementes ist hierbei die angeströmte Stirnseite. Durch das Anliegen der radial umlaufenden Dichtung an der Gehäuseaufnahme des ersten Gehäuseteils wird eine Abdichtung zwischen An- und Abströmseite hergestellt, wobei ein zweites Gehäuseteil als Gegenpart mit einem Teil in die Öffnung des Stützkörpers des Filterelementes eingeclipst wird und wobei das zweite Gehäuseteil die Form eines fluiddurchlässigen Stützgitters aufweist. Die Außenkontur des fluiddurchlässigen Stützgitters ist korrespondierend zur stirnseitigen Anlagefläche der umlaufenden Dichtung ausgestaltet, und an der Außenkontur sind Befestigungsmittel zur lösbaren Befestigung des zweiten Gehäuseteils am ersten Gehäuseteil unter Einklemmung der Dichtung des Filterelementes angeordnet. Dadurch erfolgt eine Zentrierung des Filterelementes zum zweiten Gehäuseteil und durch das zweite Gehäuseteil eine weitere Zentrierung zum ersten Gehäuseteil. Nach dem Lösen der Befestigung zwischen den beiden Gehäuseteilen ist anschließend eine Handhabung des Filterelementes durch das zweite Gehäuseteil möglich. Im Wartungsfall kann dann das zweite Gehäuseteil mit dem daran lösbar verbundenen Filterelement beispielsweise auf einem Tisch abgestellt werden, und über ein Lösen einer Clipsverbindung zwischen zweitem Gehäuseteil und Filterelement können diese beiden Teile dann anschließend voneinander getrennt werden. Bei einem Austausch des Filterelementes im Wartungsfall wird anschließend das neue Filterelement mit dem zweiten Gehäuseteil über ein Einclipsen verbunden, wobei eine Zentrierung zwischen zweitem Gehäuseteil und Filterelement erfolgt, und anschließend werden zweites Gehäuseteil und daran angeschlossenes Filterelement in das erste Gehäuseteil eingeführt und über eine Verbindung zwischen erstem und zweitem Gehäuseteil miteinander verbunden.

Gemäß einer vorteilhaften Ausgestaltung der Erfindung sind die mindestens eine flache Lage und die mindestens eine gefaltete Lage im Wechsel um den Stützkörper gewickelt. Der Stützkörper weist ein axial über die Höhe des Stützkörpers verlaufende Stufe auf, welche eine Anschlagkante für die erste Wickellage darstellt. Durch das Einbringen der axial verlaufenden Stufe in dem Stützkörper, lässt sich das Aufwickeln des Filtermediums exakt definieren. Im Bereich dieser Stufe wird beispielsweise eine Klebstoffraupe aufgetragen, auf welche dann die erste Wickellage aufgeklebt wird und wobei der Anfang der Wickellage an der axial verlaufenden Stufe anliegt. Die Höhe der axial verlaufenden Stufe ist bevorzugt der Höhe der ersten Wickellage anzupassen, so dass nach der ersten vollständigen Umrundung des Stützkörpers mit der Wickellage keine Stufe für die weiteren Lagen aufkommt. Da der Stützkörper bevorzugt die gleiche Breite, also die Entfernung zwischen den beiden Stirnseiten, wie die Breite der Wickellagen aufweist, zeigt sich hier ein weiterer Vorteil der Ausgestaltung des Stützkörpers, nämlich, dass der Stützkörper in einer Vorrichtung exakt eingespannt werden kann, wobei die Vorrichtung den Stützkörper nach Ankleben des Anfangs der ersten Wickellage in Rotation versetzt und so die weiteren Lagen auf den Stützkörper aufgewickelt werden können. Durch eine identische Breite von Stützkörper und Wickellage ist die Führung der Wickellagen zu einem ebenen stirnseitigen Abschluss besonders einfach zu realisieren.

Es ist vorteilhaft, die axial verlaufende Stufe im Wesentlichen in der Mitte des länglichen Stützkörpers anzuordnen und im jeweils äußeren Bereich der ersten Stirnseite des Filterelementes jeweils eine Öffnung mit Mitteln zur Handhabung des Filterelementes anzuordnen. Durch die räumliche Trennung der axial verlaufenden Stufe von den stirnseitigen Öffnungen des Stützkörpers ergeben sich auch bei einer evtl. Überdosierung der Leim- oder Klebraupe keine Probleme beispielsweise durch ein Verkleben der Öffnungen des Stützkörpers.

Urformtechnisch ist es weiterhin vorteilhaft, dass am Stützkörper im Bereich wenigstens einer Öffnung parallel zur Stirnseite an der Außenfläche des Stützkörpers angeordnet wenigstens eine Nut vorgesehen ist. Bei einer Herstellung des Stützkörpers aus Kunststoff ist es zu vermeiden, Materialanhäufungen im Verlauf von Wandstärken zu produzieren. Diese Materialanhäufungen führen nach dem Spritzgießprozess beim Erkalten zu Spannungen und evtl. auch zu einem Verzug des Formteils. Durch die im Stützkörper vorhandene Anschlagstufe für die Wickellagen weisen die beiden außenliegenden Endbereiche des Stützkörpers eine unterschiedliche Dicke auf. Da bevorzugt die beiden Öffnungen zur Handhabung des Filterelementes im Stützkörper die gleiche Größe aufweisen und in ihrer Lage zueinander ausgerichtet sind, kommt es hier zu einer Materialanhäufung in der Wandstärke der Öffnung auf der dickeren Seite des Stützkörpers. Durch das Anlegen einer parallel zur Stirnseite verlaufenden Nut im Bereich dieser Wandung wird durch die Nut dort von außen die Materialanhäufung eliminiert, wobei dennoch umlaufende Anlagekanten für die Wickelung des Filtermediums erhalten bleiben.

Gemäß einer vorteilhaften Ausgestaltung der Erfindung weist wenigstens eine Öffnung des Stützkörpers einen Axialanschlag für den Gegenpart auf. Der Axialanschlag kann hierbei durch eine nach innen in die Öffnung hineinstehende Kante oder durch eine Verjüngung des Öffnungsdurchmessers in das Innere des Stützkörpers hinein erfolgen. Durch die Bereitstellung des Axialanschlages ergibt sich ein Vorteil bei der Handhabung des Filterelementes durch den Gegenpart, da hiermit ein axialer Druck in Richtung des Filterelementes durch den Gegenpart ausgeübt werden kann, um das Filterelement in die Einbauposition zu bringen.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Kurze Beschreibung der Zeichnungen

Weitere Einzelheiten der Erfindung werden in der Zeichnung anhand von schematischen Ausführungsbeispielen beschrieben. Hierbei zeigt
Figur 1 eine schematische Ansicht der vollständigen Filtervorrichtung,
Figur 2 eine schematische Ansicht von Sicherungsgitter und Filterelement,
Figur 3 eine schematische Ansicht von Sicherungsgitter und dazugehörigem Stützkörper unter Weglassung des Filtermediums, und
Figur 4 eine Einzelansicht des Stützkörpers.

### Ausführungsform(en) der Erfindung

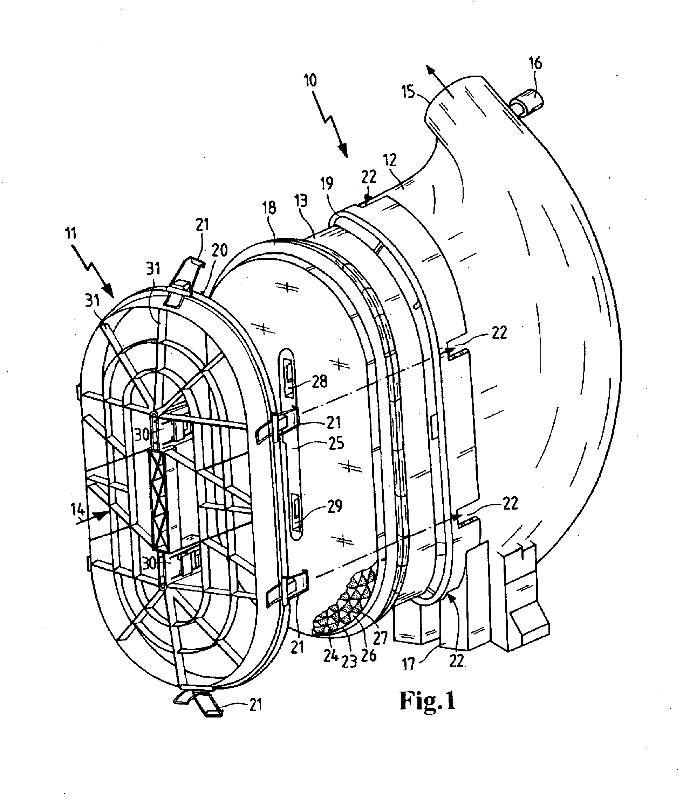

Die Figur 1 zeigt eine Filtervorrichtung 10 für den stationären Einsatz zur Filterung der Ansaugluft eines Kompressors. Diese Filtervorrichtung 10 kann jedoch auch genauso gut im mobilen Bereich verwendet werden, überall dort, wo die Filterung eines Luftstromes notwendig ist. Die Filtervorrichtung 10 weist als erstes Gehäuseteil ein Sicherungsgitter 11 sowie ein zweites Gehäuseteil 12 mit einem dichtend dazwischen angeordneten Filterelement 13 auf. Das Filterelement 13 wird dabei axial durchströmt, wobei die eine Stirnseite den Einlass 14 darstellt und das zweite Gehäuseteil 12 den Auslass 15 aufweist. Im Bereich des Auslasses 15 ist ein Wartungsanzeiger 16 angeordnet, welcher über eine entsprechende Darstellung nach entsprechender Beladung des Filterelementes einen Wartungsbedarf des Filterelementes 13 anzeigt. Das zweite Gehäuseteil 12 ist über einen Gehäuseflansch 17 mit dem Boden verbunden. Zur Abdichtung zwischen einer Roh- und einer Reinseite weist das Filterelement 13 eine im Bereich der ersten Stirnseite des Filterelementes 13 angeordnete umlaufende Dichtung 18 auf, welche an einer Anlagedichtfläche 19 des zweiten Gehäuseteils aufliegt und somit für eine Abdichtung zwischen dem Inneren des Gehäuses und der Umgebung durch das Filterelement 13 sorgt. Zur Befestigung des Filterelementes 13 in dem zweiten Gehäuseteil 12 wird das Sicherheitsgitter 11 über eine am Sicherungsgitter 11 vorhandene Auflagefläche 20 auf die umlaufende Dichtung 18 gedrückt und daraufhin mit Schnapphaken 21, welche am Sicherheitsgitter 11 vorhanden sind, an Aussparungen 22, welche am zweiten Gehäuseteil 12 vorhanden sind, arretiert. Das Filterelement 13 ist aus einem Wechsel aus flachen Filterlagen 23 und gefalteten Filterlagen 24, welche um einen Stützkörper 25, welcher zentral im Filterelement angeordnet ist, gewickelt sind, hergestellt. Durch den Wechsel der flachen Lagen 23 und der gefalteten Lagen 24 ergibt sich nach der Wickelung um den Stützkörper 25 eine Kanalstruktur, welche durch den Einsatz eines Klebstoffes zu wechselseitig offenen Kanälen 26 und geschlossenen Kanälen 27 führt. So muss die zu filtrierende Luft beim Durchgang durch das Filterelement 13 erst in einen der offenen Kanäle 26 eintreten, durchtritt im Verlauf des Kanals entweder die flache Filterlage 23 oder gefaltete Filterlage 24, um dann aus dem benachbarten Kanal aus dem Filterelement 13 wieder herauszutreten. Das bedeutet, dass jeder Kanal, welcher an der ersten Stirnseite offen ist, an seiner zweiten Stirnseite geschlossen ist und die um diesen Kanal herum benachbarten Kanäle genau gegenteilig geöffnet und geschlossen sind. Der im Filterelement 13 angeordnete Stützkörper 25 weist eine erste Öffnung 28 und eine zweite Öffnung 29 auf, in welche jeweils ein Verbindungselement 30, welches mit dem Sicherungsgitter 11 verbunden ist, eintaucht. Die Kombination aus Verbindungselement 30 und den Öffnungen 28, 29 ergibt die Handhabbarkeit des Filterelementes 13 über das Sicherungsgitter 11. Die Verbindung zwischen Verbindungselement 30 und dem Stützkörper 25 über die Öffnungen 28, 29 ist lösbar gestaltet. Zur Stabilisierung des Sicherungsgitters 11 und zum Schutz der stirnseitigen Oberfläche des Filterelementes 13 sind am Sicherungsgitter 11 Rippen 31 ausgeformt, welche nur einen absolut geringen Druckverlust bei der stirnseitigen Anströmung des Filterelementes 13 verursachen, aber dennoch einen sehr guten Schutz des Filterelementes 13 gegen Beschädigung darstellen. Weiterhin kann durch einen werkzeuglosen Eingriff in die Rippen 31 das Filterelement 13 mit Hilfe des Sicherungsgitters 11 zu Wartungszwecken gehandhabt werden.

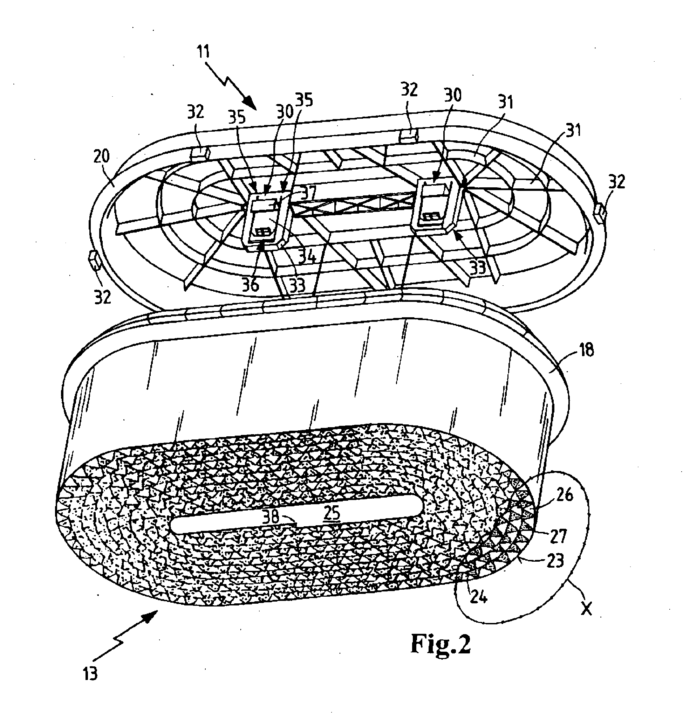

Die Figur 2 zeigt eine schematische Ansicht des Sicherungsgitters 11 und des Filterelementes 13. Der vorherigen Figur entsprechende Bauteile sind mit den gleichen Bezugszeichen versehen. Umlaufend um den Kragen des Sicherungsgitters 11 sind verteilt mehrere Befestigungselemente 32 angeordnet, an welchen die Schnapphaken 21 mit dem Sicherungsgitter 11 verbunden werden. In dieser Ansicht ist gut am Sicherungsgitter 11 die Ausführung der Verbindungselemente 30 zu erkennen. An ihrem axial auslaufenden Ende weisen die Verbindungselemente 30 Einführschrägen 33 auf, welche bei der Verbindung zwischen Sicherungsgitter 11 und Filterelement 13 für ein verkantungsfreies und sich selbst zentrierendes Verbinden zwischen Sicherungsgitter 11 und Filterelement 13 sorgen. Die Verbindungselemente 30 weisen ein kastenförmiges Profil auf, wobei an den beiden großen Außenflächen Verbindungsplatten 34 angeordnet sind. Diese Verbindungsplatten 34 sind einstückig mit den Verbindungselementen 30 verbunden. Dadurch, dass die Verbindungsplatten 34 an ihren Längskanten durch Schlitze 35 von den Verbindungselementen 30 getrennt sind und an ihrer unteren, den Rippen 31 abgewandten Seite ebenfalls nicht mit den Verbindungselementen 30 verbunden sind, sind sie quer zur Verbindungsrichtung zwischen Sicherungsgitter 11 und Filterelement 13 flexibel. An den Verbindungsplatten 34 sind im unteren Bereich nach außen ragende Schnapphaken 36 und im oberen Bereich in der Nähe der Verbindung zum Verbindungselement 30 sind Druckteile 37 angeordnet. Über diese Druckteile 37 kann von außen durch einen Durchgriff durch die Rippen 31 des Sicherungsgitters 11 über ein Zusammendrücken der Verbindungsplatten 34 die durch die Schnapphaken 36 hergestellte Schnappverbindung mit dem Stützkörper 25 gelöst werden. Im unteren Bereich des Stützkörpers 25 lässt sich eine Anschlagkante 38 erkennen, welche sich axial durch den gesamten Stützkörper 25 bis zur oberen Stirnseite durchzieht. Die erste Lage des aufzuwickelnden Filtermediums, bestehend aus einer flachen Lage 23 und einer gefalteten Lage 24, wird anstoßend an die Anschlagkante 38 des Stützkörpers 25 angelegt, dort über einen Leimauftrag verleimt und von dort ausgehend hier im Uhrzeigersinn um den Stützkörper aufgewickelt. In der Detaildarstellung "X" sind die in Figur 2 beschriebenen offenen Kanäle und die geschlossenen Kanäle 27, sowie die flachen Filterlagen 23 und die gefalteten Filterlagen 24 nochmals besonders dargestellt.

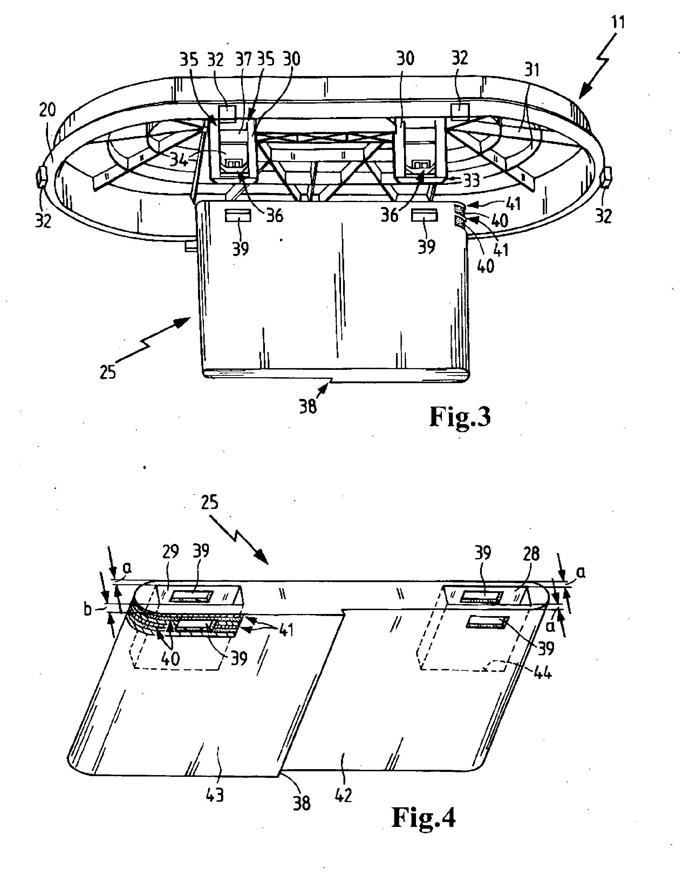

Die Figur 3 zeigt ebenfalls eine schematische Ansicht des Sicherungsgitters 11 kurz vor der Verbindung mit dem Stützkörper 25. Den vorherigen Figuren entsprechende Bauteile sind mit den gleichen Bauteilen versehen. Zur Verdeutlichung der Verbindung wurde hier das Filtermedium inklusive umlaufender Dichtung 18 weggelassen. Zur Herstellung der Schnappverbindung mit den Schnapphaken 36 sind in dem Stützkörper 25 vier Fenster 39 angeordnet. Diese Fenster können als vollständige Durchbrüche oder auch als nicht durchgehende Gegenlager für die Schnapphaken 36 ausgeführt sein. Im rechten oberen Bereich des Stützkörpers sind zwei Nuten 40 im Bereich der rechten Fenster 39 angeordnet, wobei das übrig gebliebene Material als Stege 41 die gleiche Höhe wie der übrige Stützkörper aufweisen. Dadurch ist beim Aufwickeln des Filtermediums auf den Stützkörper 25 ein durchgehendes Anliegen der Wickellagen 23, 24 am Stützkörper 25 gewährleistet.

Die Figur 4 zeigt eine schematische Einzelansicht des Stützkörpers 25. Den vorherigen Figuren entsprechende Bauteile sind mit den gleichen Bezugszeichen versehen. Die oben beschriebenen Verbindungselemente 30, welche von ihren geometrischen Abmaßen bevorzugt gleich ausgeführt sind, tauchen in die Öffnungen 28 und 29 des Stützkörpers 25 ein. Dadurch, dass der Stützkörper 25 durch die Anschlagkante 38 eine materialschwache Seite 42 und eine materialstarke Seite 43 aufweist, und die Öffnungen 28 und 29 bedingt durch die gleichmäßig ausgeführten Verbindungselemente 30 ebenfalls gleich groß ausgeführt sind, ergeben sich Unterschiede in der Wandstärke des Stützkörpers 25 im Bereich der Öffnungen 28, 29. Da zusätzlich die Öffnungen 28, 29 achsparallel zueinander ausgerichtet sind, weist die Öffnung 28 zweimal die gleiche Wandstärke a auf, wohingegen die Wandstärke der Öffnung 29 einmal die Wandstärke a und einmal die deutlich größere Wandstärke b aufweist. Der Stützkörper wird bevorzugt im Spritzgießprozess hergestellt, wobei hier eine Materialanhäufung im Herstellungsprozess vermieden werden sollte. Durch die Ausbildung der beiden Nuten 40, welche nur im Bereich der dickeren Wandstärke b angeordnet sind, wird die Materialanhäufung vermieden, und ein Verziehen des Stützkörpers 25 oder ein unnötiger Spannungsaufbau im Bereich der Öffnung 29 wird dadurch verhindert. Durch die Ausbildung der Öffnungen 28 und 29 als eine Art Sackloch wird durch die untere Abschlusskante der Öffnungen 28, 29 ein Axialanschlag 44 für die Verbindungselemente 30 gebildet. Dadurch ist gewährleistet, dass beim Handhabungsprozess des Filterelementes 13 durch das Sicherungsgitter 11 ein Durchdrücken und Kaputtdrücken des Sicherungsgitters 11 bei Ausübung einer axialen Kraft in Richtung des Filterelementes 13 vermieden wird.

## Patentansprüche

1. Gehäuseteil als Gegenpart für
ein Filterelement (13) für einen Fluidstrom zur stirnseitigen Anströmung, aufweisend
- mindestens eine flache Lage (23) und mindestens eine gefaltete Lage (24), wobei die mindestens eine flache Lage mit der mindestens einen gefalteten Lage im Wechsel derart angeordnet ist, dass sich Kanäle mit offenem, insbesondere dreieckigem Querschnitt ergeben,
- dichte Verschlüsse jeweils der einen ersten Gruppe von Kanälen einerseits und dichte Verschlüsse der restlichen, nicht zu genannter Gruppe zählenden Kanäle einer zweiten Gruppe andererseits derart, dass das zu filternde Fluid bei der Durchströmung des Filterelementes von einer Anströmseite, gebildet durch eine Stirnseite des Filterelementes, zu einer Abströmseite, gebildet durch dessen andere Stirnseite, eine der genannten Lagen, die zur Filterung des Fluides vorgesehen ist, durchtreten muss,
- Mittel zur Abdichtung (13) der Anströmseite von der Abströmseite des Filterelementes in einem Gehäuseteil,
- wenigstens einen zentral im Filterelement angeordneten, von den Kanälen umgebenen Stützkörper (25), welcher sich axial im Wesentlichen bis zu wenigstens einer ersten Stirnseite des Filterelementes erstreckt,
- wobei sowohl die mindestens eine flache Lage als auch die mindestens eine gefaltete Lage aus durchströmbaren Filtermedien bestehen,
- wobei an jeder den offenen Querschnitt bildenden Seite derjenigen Kanäle der ersten Gruppe, die vom Rand des Filterelementes beabstandet sind, ein Kanal der zweiten Gruppe benachbart ist, so dass die vollständige Fläche der Kanäle der ersten Gruppe bis auf Faltkanten der Kanäle vom Fluid durchströmbar ist, wobei der Stützkörper an der sich im Wesentlichen bis zur ersten Stirnseite des Filterelementes erstreckenden Seite, wenigstens eine stirnseitig angeordnete Öffnung aufweist, in welcher Mittel zur Handhabung des Filterelementes mittels eines hierzu korrespondierenden Gegenparts (11) angeordnet sind,
**dadurch gekennzeichnet, dass** der Gegenpart einen korrespondierend zur Öffnung (28, 29) im Stützkörper gestalteten Teil aufweist, derart, dass sich der Gegenpart im Inneren der Öffnung lösbar mit dem Stützkörper verbinden lässt, wodurch eine Handhabung des Filterelementes gegeben ist.

2. Gehäuseteil als Gegenpart gemäß Anspruch 1, **dadurch gekennzeichnet, dass** der korrespondierend zur Öffnung im Stützkörper gestaltete Teil in einen Führungs- und Zentrierungsteil und einen Verbindungsteil aufgeteilt ist.

3. Gehäuseteil als Gegenpart gemäß Anspruch 1, **dadurch gekennzeichnet, dass** der Gegenpart ein Sicherungsgitter (11) ist.

4. Gehäuseteil als Gegenpart gemäß Anspruch 1, **dadurch gekennzeichnet, dass** der Gegenpart ein weiteres Funktionselement, insbesondere ein Vorabscheider ist, derart, dass das Filterelement durch das Funktionselement handhabbar ist.

5. Filtervorrichtung mit einem
Filterelement (13) für einen Fluidstrom zur stirnseitigen Anströmung, aufweisend
- mindestens eine flache Lage und mindestens eine gefaltete Lage, wobei die mindestens eine flache Lage mit der mindestens einen gefalteten Lage im Wechsel derart angeordnet ist, dass sich Kanäle mit offenem, insbesondere dreieckigem Querschnitt ergeben,
- dichte Verschlüsse jeweils der einen ersten Gruppe von Kanälen einerseits und dichte Verschlüsse der restlichen, nicht zu genannter Gruppe zählenden Kanäle einer zweiten Gruppe andererseits derart, dass das zu filternde Fluid bei der Durchströmung des Filterelementes von einer Anströmseite, gebildet durch eine Stirnseite des Filterelementes, zu einer Abströmseite, gebildet durch dessen andere Stirnseite, eine der genannten Lagen, die zur Filterung des Fluides vorgesehen ist, durchtreten muss,
- Mittel zur Abdichtung (13) der Anströmseite von der Abströmseite des Filterelementes in einem Gehäuseteil,
- wenigstens einen zentral im Filterelement angeordneten, von den Kanälen umgebenen Stützkörper (25) welcher sich axial im Wesentlichen bis zu wenigstens einer ersten Stirnseite des Filterelementes erstreckt,
- wobei sowohl die mindestens eine flache Lage als auch die mindestens eine gefaltete Lage aus durchströmbaren Filtermedien bestehen,
- wobei an jeder den offenen Querschnitt bildenden Seite derjenigen Kanäle der ersten Gruppe, die vom Rand des Filterelementes beabstandet sind, ein Kanal der zweiten Gruppe benachbart ist, so dass die vollständige Fläche der Kanäle der ersten Gruppe bis auf Faltkanten der Kanäle vom Fluid durchströmbar ist, wobei der Stützkörper an der sich im Wesentlichen bis zur ersten Stirnseite des Filterelementes erstreckenden Seite, wenigstens eine stirnseitig angeordnete Öffnung aufweist, in welcher Mittel zur Handhabung des Filterelementes mittels eines hierzu korrespondierenden Gegenparts angeordnet sind und einem Gegenpart gemäß Anspruch 1,
**dadurch gekennzeichnet, dass** das Filterelement (13) in einem ersten Gehäuseteil (12) angeordnet ist, wobei eine im Bereich der ersten Stirnseite des Filterelementes radial umlaufende Dichtung (18) des Filterelementes an einer korrespondierend hierzu ausgestalteten Gehäuseaufnahme des ersten Gehäuseteils anliegt, derart, dass eine Abdichtung zwischen An- und Abströmseite hergestellt ist, wobei ein zweites Gehäuseteil (11) als Gegenpart mit einem Teil in die Öffnung des Stützkörpers (25) des Filterelements eingeklipst ist, wobei das zweite Gehäuseteil die Form eines fluiddurchlässigen Sicherungsgitters (11) aufweist, die Außenkontur korrespondierend zur stirnseitigen Anlagefläche der umlaufenden Dichtung ausgestaltet ist und an der Außenkontur Befestigungsmittel zur lösbaren Befestigung des zweiten Gehäuseteils am ersten Gehäuseteil unter Einklemmung der Dichtung des Filterelementes angeordnet sind, derart, dass nach dem Lösen der Befestigung zwischen den Gehäuseteilen eine Handhabung des Filterelementes durch das zweite Gehäuseteil möglich ist.

## Claims

1. Housing component as counterpart for
a filter element (13) for a fluid flow for a frontal oncoming flow, comprising
- at least one flat layer (23) and at least one folded layer (24), the at least one flat layer alternating with the at least one folded layer in such a way that ducts with an open, in particular triangular cross-section are formed,
- on the one hand, tight closures each of the first group of ducts and, on the other hand, tight closures of the remaining ducts of a second group not belonging to the mentioned group in such a way that the fluid to be filtered has to flow through one of the mentioned layers which are provided for filtering the fluid, when flowing through the filter element from an inflow side, formed by a front face of the filter element, to an outflow side, formed by its other front face,
- means for sealing (18) the inflow side from the outflow side of the filter element in a housing component,
- at least one support structure (25) disposed centrally in the filter element and surrounded by the ducts which extends axially substantially towards at least one first front face of the filter element,
- the at least one flat layer as well as the at least one folded layer consisting of filter media that can be flowed through,
- one duct of the second being adjacent to each side forming the open cross-section of those ducts of the first group, which are spaced away from the edge of the filter element, so that the complete surface of the ducts of the first group can be flowed through by the fluid with the exception of the fold edges of the ducts, the support structure on the side extending substantially up to the first front face of the filter element featuring at least one frontally disposed opening in which means for handling the filter element by means of a counterpart (11) corresponding thereto are disposed, **characterized in that** the counterpart features a part designed correspondingly to the opening (28, 29) in the support structure in such a way that the counterpart can be connected detachably with the support structure inside the opening so that the handling of the filter element is ensured.

2. Housing component as counterpart according to claim 1, **characterized in that** the part designed correspondingly to the opening in the support structure is divided into a guide and centering component and a connection component.

3. Housing component as counterpart according to claim 1, **characterized in that** the counterpart is a safety grid (11).

4. Housing component as counterpart according to claim 1, **characterized in that** the counterpart is another functional element, in particular a pre-separator in such a way that the filter element can be handled through the functional element.

5. Filter device with a
filter element (13) for a fluid flow for a frontal oncoming flow, comprising
- at least one flat layer and at least one folded layer, the at least one flat layer alternating with the at least one folded layer in such a way that ducts with an open, in particular triangular cross-section are formed,
- on the one hand, tight closures each of the first group of ducts and, on the other hand, tight closures of the remaining ducts of a second group not belonging to the mentioned group in such a way that the fluid to be filtered has to flow through one of the mentioned layers which are provided for filtering the fluid, when flowing through the filter element from an inflow side, formed by a front face of the filter element, to an outflow side, formed by its other front face,
- means for sealing (18) the inflow side from the outflow side of the filter element in a housing component,
- at least one support structure (25) disposed centrally in the filter element and surrounded by the ducts which extends axially substantially towards at least one first front face of the filter element,
- the at least one flat layer as well as the at least one folded layer consisting of filter media that can be flowed through,
- one duct of the second being adjacent to each side forming the open cross-section of those ducts of the first group, which are spaced away from the edge of the filter element, so that the complete surface of the ducts of the first group can be flowed through by the fluid with the exception of the fold edges of the ducts, the support structure on the side extending substantially up to the first front face of the filter element featuring at least one frontally disposed opening in which means for handling the filter element by means of a counterpart corresponding thereto are disposed,
and a counterpart according to claim 1,
**characterized in that** the filter element (13) is disposed in a first housing component (12), in the area of the first front face of the filter element a radially circumferential sealing (18) of the filter element contacting a correspondingly designed housing seating thereto of the first housing component in such a way that a sealing is realized between inflow side and outflow side, a second housing component (11) as counterpart being clipped with one part into the opening of the support structure (25) of the filter element, the second housing component featuring the form of a fluidpermeable safety grid (11), the outer contour being designed correspondingly to the frontal contact area of the circumferential sealing and attachment means for a detachable attachment of the second housing component on the first housing component by clamping the sealing of the filter element being disposed at the outer contour in such a way that after detaching the attachment between the housing components a handling of the filter element through the second housing component is possible.

## Revendications

1. Partie de boîtier en tant que contrepartie pour
un élément filtrant (13) pour un flux de fluides pour une arrivée frontale, présentant
- au moins une couche plane (23) et au moins une couche pliée (24), la couche plane, au moins au nombre d'une, étant disposée en alternance avec la couche pliée, au moins au nombre d'une, de sorte que des canaux avec une section ouverte, notamment triangulaire, se forment,
- des fermetures étanches du premier groupe de canaux, d'une part, et des fermetures étanches des canaux résiduels, n'appartenant pas au groupe cité, d'un deuxième groupe, d'autre part, de sorte que le fluide à filtrer doit traverser l'une des couches mentionnées destinée à filtrer le fluide lorsqu'il passe à travers l'élément filtrant d'un côté entrée, formé par une face frontale de l'élément filtrant, vers un côté sortie, formé par l'autre face frontale de l'élément filtrant,
- des éléments d'étanchéité (18) du côté entrée par rapport au côté sortie de l'élément filtrant dans une partie de boîtier,
- au moins un élément d'appui (25) placé au centre de l'élément filtrant et entouré des canaux, lequel s'étend en sens axial essentiellement jusqu'à au moins une première face frontale de l'élément filtrant,
- non seulement la couche plane, au moins au nombre d'une, mais encore la couche pliée, au moins au nombre d'une, étant composées de milieux filtrants pouvant être traversés,
- un canal du deuxième groupe adjacent à chaque côté formant la section ouverte des canaux du premier groupe qui sont espacés du bord de l'élément filtrant, de manière à ce que la surface entière des canaux du premier groupe puisse être traversée par le fluide à l'exception de bords de pliage des canaux, l'élément d'appui présentant, du côté qui s'étend essentiellement jusqu'à la première face frontale de l'élément filtrant, au moins une ouverture frontale dans laquelle sont disposés des éléments permettant de manipuler l'élément filtrant au moyen d'une contrepartie (11) correspondante,
**caractérisé en ce que** la contrepartie présente une pièce agencée dans l'élément d'appui et correspondant à l'ouverture (28, 29) de sorte que la contrepartie puisse être assemblée, à l'intérieur de l'ouverture, de manière amovible avec l'élément d'appui pour autoriser une manipulation de l'élément filtrant.

2. Partie de boîtier en tant que contrepartie selon la revendication 1, **caractérisé en ce que** la pièce agencée dans l'élément d'appui et correspondant à l'ouverture est divisée en une pièce de guidage et de centrage et une pièce de jonction.

3. Partie de boîtier en tant que contrepartie selon la revendication 1, **caractérisé en ce que** la contrepartie est une grille de sécurité (11).

4. Partie de boîtier en tant que contrepartie selon la revendication 1, **caractérisé en ce que** la contrepartie est un autre élément fonctionnel, notamment un pré-séparateur, de manière à ce qu'il soit possible de manipuler l'élément filtrant au travers de l'élément fonctionnel.

5. Dispositif de filtration avec un
élément filtrant (13) pour un flux de fluides pour une arrivée frontale, présentant
- au moins une couche plane et au moins une couche pliée, la couche plane, au moins au nombre d'une, étant disposée en alternance avec la couche pliée, au moins au nombre d'une, de sorte que des canaux avec une section ouverte, notamment triangulaire, se forment,
- des fermetures étanches du premier groupe de canaux, d'une part, et des fermetures étanches des canaux résiduels, n'appartenant pas au groupe cité, d'un deuxième groupe, d'autre part, de sorte que le fluide à filtrer doit traverser l'une des couches mentionnées destinée à filtrer le fluide lorsqu'il passe à travers l'élément filtrant d'un côté entrée, formé par une face frontale de l'élément filtrant, vers un côté sortie, formé par l'autre face frontale de l'élément filtrant,
- des éléments d'étanchéité (18) du côté entrée par rapport au côté sortie de l'élément filtrant dans une partie de boîtier,
- au moins un élément d'appui (25) placé au centre de l'élément filtrant et entouré des canaux, lequel s'étend en sens axial essentiellement jusqu'à au moins une première face frontale de l'élément filtrant,
- non seulement la couche plane, au moins au nombre d'une, mais encore la couche pliée, au moins au nombre d'une, étant composées de milieux filtrants pouvant être traversés,
- un canal du deuxième groupe adjacent à chaque côté formant la section ouverte des canaux du premier groupe qui sont espacés du bord de l'élément filtrant, de manière à ce que la surface entière des canaux du premier groupe puisse être traversée par le fluide à l'exception de bords de pliage des canaux, l'élément d'appui présentant, du côté qui s'étend essentiellement jusqu'à la première face frontale de l'élément filtrant, au moins une ouverture frontale dans laquelle sont disposés des éléments permettant de manipuler l'élément filtrant au moyen d'une contrepartie correspondante,
et une contrepartie selon la revendication 1,
**caractérisé en ce que** l'élément filtrant (13) est disposé dans une première partie de boîtier (12), un joint périphérique (18) de l'élément filtrant évoluant en sens radial à proximité de la première face frontale de l'élément filtrant touchant un logement de boîtier, conçu de façon correspondante à cet effet, de la première partie de boîtier, de manière à assurer l'étanchéité entre le côté entrée et le côté sortie, une deuxième partie de boîtier (11) en tant que contrepartie étant clipsée avec une pièce dans l'ouverture de l'élément d'appui (25) de l'élément filtrant, la deuxième partie de boîtier ayant la forme d'une grille de sécurité (11) perméable aux fluides, le contour extérieur étant conçu de façon correspondante à la surface de contact du joint périphérique et des éléments de fixation étant prévus sur le contour extérieur, ces éléments assurant une fixation amovible de la deuxième partie de boîtier sur la première partie de boîtier par serrage du joint de l'élément filtrant, de sorte qu'il soit possible de manipuler l'élément filtrant au travers de la deuxième partie de boîtier après avoir desserré la fixation entre les parties de boîtier.
